# EUROPÄISCHE PATENTSCHRIFT

(11) **EP 2 258 534 B1**
(45) Veröffentlichungstag und Bekanntmachung des Hinweises auf die Patenterteilung: **06.06.2012**
(21) Anmeldenummer: 10163522.5
(22) Anmeldetag: 21.05.2010
(51) Int. Cl.: B29C 49/42, B65G 47/84, B29C 49/64

(54) **Blasmaschine mit Wechselautomat**
Blowing machine with automatic changer
Souffleuse avec automate de changement

(30) Priorität: 03.06.2009 DE 102009023726
(43) Veröffentlichungstag der Anmeldung: 08.12.2010
(73) Patentinhaber: Krones AG, 93073 Neutraubling (DE)
(72) Erfinder: Stoiber, Christian, 93185 Michelsneukirchen (DE); Schönberger, Wolfgang, 93179 Brennberg (DE)
(74) Vertreter: Grünecker, Kinkeldey, Stockmair & Schwanhäusser

(56) Entgegenhaltungen:
- EP-A1- 2 030 759
- DE-A1- 2 261 226
- DE-A1- 3 910 293
- DE-A1-102007 037 400

## Beschreibung

Die Erfindung betrifft eine Blasmaschine der im Oberbegriff des Patentanspruchs 1 angegebenen Art.

In einer Blasmaschine, insbesondere einer Streck-Blasmaschine für Kunststoffflaschen, werden vorgefertigte Preforms entlang einer Förderstrecke mit einer Förderkette entlang Heizstationen eines Heizmoduls gefördert, ehe sie im Blasrad oder der Blasstation verarbeitet werden. Jede Preform ist bereits mit einer Mündung ausgebildet, die zumindest im Wesentlichen der Mündung der fertigen Flasche entspricht. An der Förderkette sind Heizdorne wechselbar gehaltert, die an die Mündung des Preforms angepasst sind, beim Einlaufen in den Heizmodul mit Preforms beladen werden, häufig die Preforms beim Durchlaufen des Heizmoduls rotieren, und dann von den Preforms entladen werden, ehe diese in der Blasstation verarbeitet werden. Jede Preform wird an der Mündung von dem darin eingesteckten Heizdorn gehalten. Da in der Blasmaschine viele verschiedene Behältertypen herstellbar sind, beispielsweise Flaschen, die unterschiedliche Mündungen (Mündungsdurchmesser, Mündungslänge, Mündungsform und Haltering) benötigen, muss die Blasmaschine für Preforms mit einer anderen Mündung zumindest hinsichtlich der Heizdorne umgerüstet werden. Neben Heizdornen gibt es an der Förderkette noch andere Garniturenteile, wie Abschirmplatten, die bei einer Umrüstung manchmal ebenfalls zu wechseln sind. Die Abschirmplatte besitzt einen Durchgang für den Heizdorn bzw. die Preform, wobei der Durchgang die Preform möglichst eng umschließen soll, um die Mündung im Heizmodul gegen unerwünschte Wärmeeinwirkung abzuschirmen. Für Preforms mit einer anderen Mündungslänge brauchen gegebenenfalls nur die Heizdorne gewechselt zu werden. Für Preforms mit einem anderen Mündungsdurchmesser müssen meist auch die Abschirmplatten gewechselt werden. Diese Wechselvorgänge werden in der Praxis bislang manuell und einzeln von Bedienern vorgenommen, und sind mühsam und zeitaufwändig, da sich an der Förderkette bis zu 600 Heizdorne und Abschirmplatten befinden. Die gegebenenfalls hohe Restwärmebelastung ist für die Bediener unangenehm und provoziert fehlerhafte Wechsel. Außerdem bedingt der manuelle Wechsel eine sehr lange Produktionsausfallzeit für die Blasmaschine bzw. eine komplette Anlage, in der die Blasmaschine eine Komponente ist.

Bei einer aus DE 10 2007 037 400 A bekannten Blasmaschine ist an einer geeigneten Stelle der Förderstrecke ein Wechselautomat platziert, mit dem Heizdorne einzeln oder in Gruppen wechselbar sind. Der Wechselautomat weist einen oder mehrere Dorngreifer und antreibbare Betätiger auf, die linear bewegbar sind, wobei Greifer zwischen dem Wechselautomaten und der Förderstrecke arbeiten und weitere Greifer zwischen dem Wechselautomaten und von diesem getrennten Magazinen für Heizdorne.

Bei einer aus EP 2 030 759 A bekannten Blasmaschine ist an geeigneter Stelle der Förderstrecke ein Wechselautomat vorgesehen, um Abschirmplatten zu wechseln. Der Wechselautomat könnte mit einem weiteren Wechselautomaten kombiniert werden, um auch Preform-Heizdorne zu wechseln. Es sind einzelne, linear gesteuerte Greifer vorgesehen, und zwar zwischen dem Wechselautomaten und der Förderstrecke, sowie zwischen dem Wechselautomaten und vom Wechselautomaten getrennten Magazinen für neue Abschirmplatten und für gewechselte Abschirmplatten.

Der Erfindung liegt die Aufgabe zugrunde, eine Blasmaschine anzugeben, mit der bei einem Wechsel Bediener entlastbar und Wechselzeiten signifikant verkürzbar sind.

Die gestellte Aufgabe wird mit den Merkmalen des Patentanspruchs 1 gelöst.

In der Blasmaschine werden von dem Wechselautomaten zumindest die Heizdorne automatisch gewechselt. Dabei umfasst der Wechselautomat in einem Rahmengestell einen Magazinträger, einen in einer zwischen wenigstens einer Wartestellung und wenigstens einer Wechselstellung verstellbaren Lineareinheit angeordneten Entnahme- und Einsetz-Revolver mit verstellbaren Greifern, und im Bereich der Förderkette platzierte, zum Angriff an Verriegelungen an der Förderkette beweglich antreibbare Entriegelungskomponenten. Der Revolver bildet dabei einen unabhängigen Zwischenspeicher für die während eines Wechselzyklus entnommenen und einzusetzenden Heizdorne und Abschirmplatten. Ein besonders wichtiger Aspekt ist, dass der Wechselautomat universell zum automatischen Wechseln nur der Heizdorne und/oder zum sequentiellen Wechseln der Heizdorne und der Abschirmplatten ausgebildet ist, und somit dem Betreiber einer Anlagenlinie einschließlich der Blasmaschine eine universell nutzbare Ausstattung bietet, die mit demselben Wechselautomaten kurze Wechsel unabhängig davon durchführen lässt, ob für eine Änderung beispielsweise nur der Mündungslänge bei an der Förderkette bleibenden Abschirmplatten nur die Heizdorne zu wechseln sind, oder beispielsweise bei Änderung des Mündungsdurchmessers die Abschirmplatten und die Heizdorne zu wechseln sind. Dies ist besonders für Betreiber ein erheblicher Vorteil, die viele unterschiedliche Behälter in relativ kleinen Serien verarbeiten und häufig umzurüsten haben. Am Wechselautomaten selbst sind hierfür keine zeitaufwändigen Umrüstarbeiten erforderlich, da die unterschiedlichen Wechselmodi einfach steuerungsseitig beherrschbar sind. Dadurch werden die Bediener entlastet und wird ein Wechselvorgang erheblich verkürzt, da zumindest die Heizdorne, und gegebenenfalls auch die Abschirmplatten, falls erforderlich, sogar gruppenweise und rascher wechselbar sind. Zudem ist die Gefahr fehlerhafter Wechsel minimiert. Dank des kürzeren Wechselvorgangs werden Produktionsausfallzeiten der Blasmaschine und gegebenenfalls einer kompletten Anlagenlinie deutlich reduziert. Allein beim Wechsel einer mit 300 Heizdornen bestückten Förderkette lassen sich im Vergleich zum manuellen Wechseln ca. 50 Minuten einsparen. Der Wechselautomat ist in einem gegebenenfalls speziell für diesen Zweck vorgesehenen Servicebereich im Heizmodul stationär angebracht und verbleibt im Normalbetrieb im Heizmodul. Dies schließt jedoch nicht aus, den Wechselautomaten mobil zu gestalten und bei Bedarf im Servicebereich anzudocken und gegebenenfalls für andere Blasmaschinen zu verwenden. Der Wechselautomat ist mit dem Magazinträger, dem Revolver mit den Greifern und den integrierten oder zugeordneten Entriegelungskomponenten baulich einfach und funktionssicher. Der Wechselautomat kann entweder eine voll integrierte Komponente des Heizmoduls sein, oder wird nur bei Bedarf eingesetzt. Um die Wechselzeit noch mehr zu verkürzen, können mehrere Wechselautomaten eingesetzt werden, die bei abgekuppeltem Blasrad und in Schritten bewegter Förderkette gleichzeitig arbeiten. Dies umfasst es auch, beispielsweise einen Wechselautomaten für Heizdorne und einen Wechselautomaten für Abschirmplatten vorzusehen, obwohl der Vorzug einem Wechselautomaten zu geben ist, der wahlweise nur Heizdorne oder Heizdorne und Abschirmplatten automatisch wechselt. Werden Heizdome und Abschirmplatten von einem Wechselautomaten gewechselt, dann erfolgt dies sequentiell, obwohl dadurch mitumfasst sein soll, dass jeder Heizdorn gleichzeitig mit der ihm zugeordneten Abschirmplatte gewechselt wird.

Die Entriegelungskomponenten sind zweckmäßig mit Aktuatoren entweder an der Spindelbrücke oder am Wechselautomaten angeordnet, wobei die durch die Aktuatoren, vorzugsweise Pneumatikzylinder, verstellbaren Entriegelungskomponenten ausfahrbare und anhebbare Gabeln oder Finger für Heizdorn-Verriegelungen und/oder ausfahrbare Druckstifte für Abschirmplatten-Verriegelungen sein können. Die Druckstifte können in einer vorteilhaften Weiterbildung auch als Druckplatten ausgeführt werden. Die Gabeln oder Finger können entweder zwischen den Abschirmplatten-Steckfüßen oder seitlich neben diesen eingeschoben werden, falls nur die Heizdorne gewechselt werden, und werden danach oder dabei angehoben, um die entsprechend ausgebildete Heizdorn-Verriegelung zu lösen. Zweckmäßig sind die Entriegelungskomponenten in Gruppen zusammengefasst, um jeweils eine Gruppe Heizdorne und/oder Abschirmplatten gleichzeitig wechseln zu können.

Bei einer zweckmäßigen Ausführungsform ist der Magazinträger ein im Rahmengestell um eine annähernd vertikale Achse drehbarer, vorzugsweise um 180° hin- und herdrehbarer, Tisch, auf dem zumindest eine Magazinspannvorrichtung angeordnet ist. Dies erleichtert das Bestücken und Entleeren des Magazinträgers.

Bei einer günstigen Ausführungsform ist der Revolver mit den daran angeordneten Greifern im Rahmengestell und an der Lineareinheit in Schritten um eine horizontale Achse drehan-treibbar. Der Revolver weist entweder nur Greifer für Heizdorne oder in Drehrichtung abwechselnd Greifer für Heizdorne und für Abschirmplatten auf. Die Greifer wechseln einander beispielsweise mit 90°-Teilungen ab.

Um den Wechselvorgang zügig ablaufen lassen zu können, ist zweckmäßig dem Wechselautomaten ein Puffersystem für zumindest Heizdorne, vorzugsweise auch Abschirmplatten, zugeordnet. Das Puffersystem ist, vorzugsweise, zum Bereithalten von Magazinen gestaltet, die jeweils eine Gruppe Heizdorne bzw. Abschirmplatten enthalten. Gegebenenfalls wird der Wechselautomat einzeln entleert und bestückt, und können die Heizdorne und gegebenenfalls Abschirmplatten auch ohne Magazine gepuffert werden.

Bei einer zweckmäßigen Ausführungsform sind mit dem Wechselautomaten in einem Wechselzyklus über den Revolver zunächst entriegelte Abschirmplatten und nachfolgend entriegelte Heizdorne entnehmbar, ehe einzusetzende Heizdorne und danach einzusetzende Abschirmplatten montierbar sind.

Bei einer bevorzugten Ausführungsform ist sogar mindesten ein Roboter zum automatischen Bestücken und Entleeren des Wechselautomaten aus dem Puffersystem vorgesehen. Die Taktung der Förderkette, die Steuerung des Wechselautomaten und das Bestücken und Entleeren des Wechselautomaten aus dem Puffersystem werden zweckmäßig elektronisch und computergeführt in gegenseitiger Korrelation vorgenommen. Gegenüber der manuellen Bestückung und Entleerung des Wechselautomaten A lässt sich bei Verwenden wenigstens eines Roboters R gegebenenfalls eine Zeiteinsparung um etwa 5 % erzielen.

Für den Fall, dass nur die Heizdorne automatisch gewechselt werden, die in Aufnahmen in an der Förderkette relativ zu den Abschirmplatten beweglichen Spindeln angeordnet sind, kann im Servicebereich eine Spindelbrücke mit einem Spindelbewegungsmechanismus entweder stationär oder an dem Wechselautomaten gelagert sein. Zum Wechseln jedes Heizdorns wird dieser mittels des Spindelbewegungsmechanismus so weit relativ zur Abschirmplatte verlagert, dass er bequem greifbar bzw. einsetzbar ist. In solchen mit Spindeln ausgestatteten Förderketten haben die Spindeln den Zweck, den Heizdorn im Heizmodul zu rotieren und zum Beladen mit einer Preform sowie zum Entladen vorübergehend zu einer Beladestation bzw. einer Entladestation zu bewegen, beispielsweise über einen Hubweg von etwa linear 44 mm. Diese für die ordnungsgemäße Funktion der Blasmaschine konzipierte Gegebenheit an der Förderkette wird gewinnbringend auch durch den Wechselautomaten zum automatischen Wechseln nur der Heizdorne genutzt.

Zweckmäßig umfasst das Puffersystem wenigstens ein Regal, einen Tisch, einen Wechselwagen, einen Paternoster, ein Rondell, oder eine ähnliche Speichereinrichtung, vorzugsweise entweder mit Einzellagerstellen für Heizdorne und/oder Abschirmplatten oder mit Magazinlagerstellen für Heizdorn- und Abschirmplattenmagazine.

Anhand der Zeichnungen werden Ausführungsformen des Erfindungsgegenstandes erläutert. Es zeigen:
- Fig. 1: eine perspektivische Schemadarstellung eines Heizmoduls einer Blasmaschine mit einem Wechselautomaten,
- Fig. 2: den Wechselautomaten in Zuordnung zu einer Förderkette eines Heizmoduls,
- Fig. 3: eine Seitenansicht des Wechselautomaten mit einem zugeordneten Puffersystem,
- Fig. 4: eine Seitenansicht des Wechselautomaten mit einem zugeordneten Puffersystem und wenigstens einem dazwischen angeordneten Roboter,
- Fig. 5: Magazine für Heizdorn-Gruppen und Abschirmplatten-Gruppen,
- Fig. 6: eine Seitenansicht im Bereich der Förderkette,
- Fig. 7: eine im Maßstab vergrößerte Teilschnittansicht zum Wechseln einer Ab- schirmplatte,
- Fig. 8: eine im Maßstab vergrößerte Teilschnittansicht zum Wechseln eines Heiz- dorns, und
- Fig. 9: eine Seitenansicht eines Details beim Wechseln beispielsweise eines Heiz- dorns.

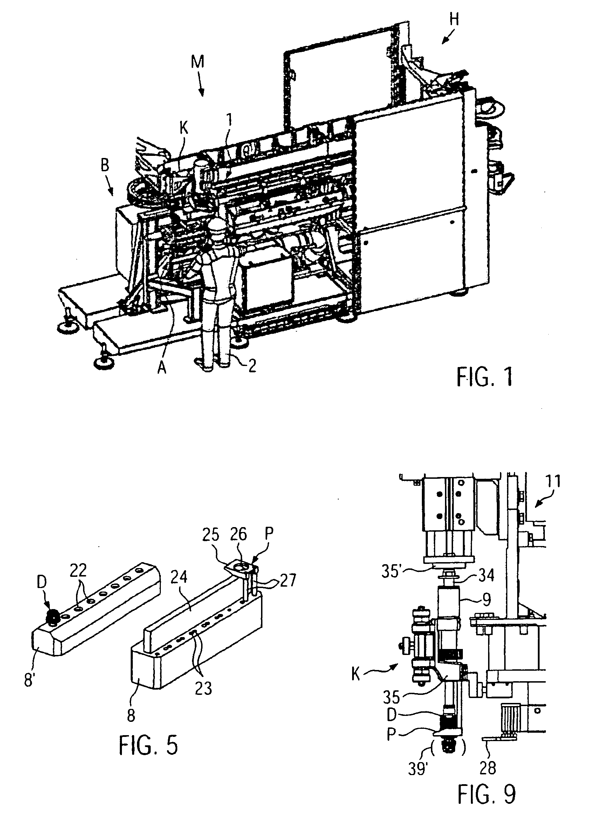

Fig. 1 zeigt beispielsweise als Teil einer Anlagenlinie eine Blasmaschine M zum Herstellen von Behältern, beispielsweise Kunststoffflaschen, die einen Heizmodul H und eine Blasstation B oder ein Blasrad (letzteres nicht im Detail gezeigt, B bezieht sich nur auf die Position, wo es angeordnet sein sollte) umfasst. Im Heizmodul H werden Preforms mittels einer Förderkette K an Heizstationen vorbeibewegt, wobei an der Förderkette K zumindest ein Servicebereich 1 ausgespart ist, in welchem ein Wechselautomat A beispielsweise in die Blasmaschine M integriert eingebaut ist. Der Wechselautomat A besteht baukastenartig aus mehreren Modulen, und dient zum automatischen Wechseln von an der Förderkette K wechselbar angeordneten Heizdornen und/oder Abschirmplatten (in Fig. 1 nicht gezeigt). Der Servicebereich 1 befindet sich beispielsweise nahe beim Umlenkbereich der Förderkette K, bzw. nahe der Schnittstelle mit der Blasstation B, die für einen Wechselvorgang von der Förderkette K abkoppelbar sein kann. Besonders bevorzugt befindet sich der Servicebereich 1 zwischen zwei Umlenkbereichen der Förderkette K. Somit wir eine leichte Handhabung in einem geradlinigem Bereich der Förderkette ermöglicht. Beim Wechselautomaten A ist ein Bediener 2 angedeutet, der beispielsweise den Wechselautomaten manuell bestückt bzw. entleert.

Im oder vor dem Heizmodul H werden, wie üblich, die Preforms auf die Heizdorne geladen und von diesen zwecks einer Wärmebehandlung bis zur Blasstation B transportiert, und in diesem Bereich wieder von den Heizdornen abgeladen und transferiert. Da an den Preforms die Mündungsbereiche schon weitgehend entsprechend dem Mündungsbereich der späteren Behälter vorgeformt sind und gegen unzweckmäßige Erwärmung zu schützen sind, ist jedem Heizdorn im Regelfall eine Abschirmplatte zugeordnet, wobei die Heizdorne und Abschirmplatten anhand der weiteren Figuren im Detail erläutert werden.

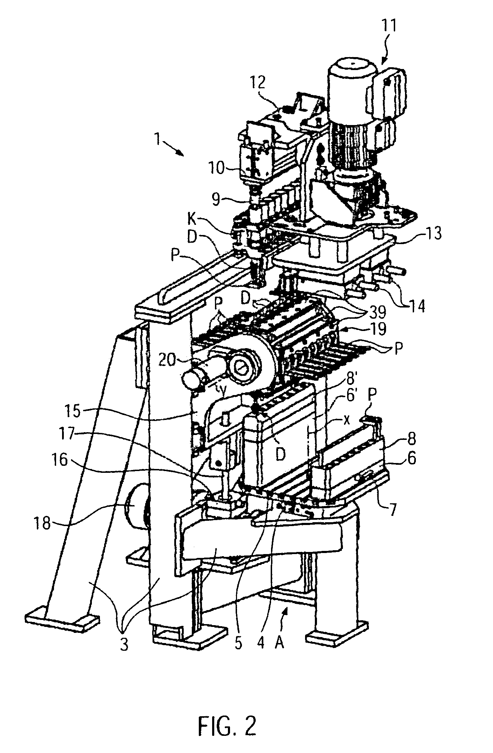

Der Wechselautomat in Fig. 2 weist ein stabiles Rahmengestell 3 mit Standsäulen, Querträgern und Fundamenten, auf und enthält entweder eine elektronische Steuervorrichtung oder ist mit dieser verbunden (nicht gezeigt). Der Wechselautomat A besteht, wie erwähnt, aus mehreren in das Rahmengestell 3 integrierten Modulen und ist als Ausstattung des Heizmoduls H oder der Blasmaschine M im Servicebereich 1 funktionell einem Abschnitt der Förderkette K zugeordnet. Der Wechselautomat A ist zweckmäßig unterhalb des Servicebereiches 1 der Förderkette K stationär und fest eingebaut. In dem Servicebereich 1 ist beispielsweise eine Spindelbrücke 11 an einer Tragkonstruktion 12 stationär montiert, an der eine Tragplatte 13 unterseitig angeordnet ist, die antreibbare Entriegelungskomponenten 14 trägt. Bei einer alternativen Ausführungsform könnten die Entriegelungskomponenten 14 auch direkt beispielsweise am Rahmengestell 3 des Wechselautomaten A angeordnet sein. Die Förderkette K weist in dieser Ausführungsform an Kettengliedern drehbar gelagerte Spindeln 9 auf, die über einen Antriebsmotor beispielsweise an der Spindelbrücke 11 während des Durchlaufes der Preforms durch den Heizmodul H zur Drehung angetrieben werden, und außerdem gegen Federkraft in Vertikalrichtung um einen vorbestimmten Hub aus der gezeigten Lage absenkbar sind (Doppelpfeil 10), und zwar in einem Beladebereich am Beginn der Förderstrecke, um die Preforms zu laden, und auch in einem Entladebereich, um die Preforms zu entladen und an die Blasstation transferieren zu lassen. In Fig. 2 ist ein Heizdorn D und eine zugeordnete Abschirmplatte P gezeigt. Zweckmäßig weist jedes Kettenglied mindestens eine Spindel 9, einen Heizdorn D und eine Abschirmplatte P auf.

Der Wechselautomat A in Fig. 2 weist im Rahmengestell 3 einen Magazinträger 4 auf, beispielsweise einen Tisch 5 mit Spannnuten für Magazinträger 6, 6', der beispielsweise um eine annähernd vertikale Achse X, vorzugsweise um 180°, hin- und herdrehbar ist. Jeder Magazinträger 6, 6' weist beispielsweise eine Spannvorrichtung 7 zum lösbaren Festlegen eines Magazins 8 bzw. 8' auf. In dem Magazin 8 ist eine Gruppe Abschirmplatten P (in Fig. 2 wird nur eine gezeigt) positioniert bereitgehalten, beispielsweise sechs bis acht Abschirmplatten P. Im Magazin 8' wird eine Gruppe Heizdorne D (in Fig. 2 ist nur einer gezeigt) bereitgehalten, beispielsweise sechs oder acht Heizdorne D.

Benachbart zum Magazinträger 4 ist im Rahmengestell 3 eine Lineareinheit angeordnet, die aus im Rahmengestell vertikal linear verschiebbaren Wangen 15, einem Getriebe 16, einem Spindeltrieb 17 und einem Antriebsmotor 18 zusammengesetzt sein kann und einen Entnahme- und Einsetz-Revolver 19 trägt, der um eine im Wesentlichen horizontale Achse Y drehbar ist. An dem Revolver 19 sind in Umfangsrichtung verteilt (z.B. in 90°-Teilungen) jeweils Greifer 39 bzw. 39' mit nicht näher hervorgehobenen Greifer-Antrieben untergebracht. Zwei um 180° zueinander versetzte Greifer 39' dienen jeweils zum Festlegen einer Gruppe Heizdorne D, während die zwei anderen, ebenfalls um 180° zueinander versetzten Greifer 39 jeweils zum Festlegen einer Gruppe Abschirmplatten P verwendbar sind. Der Revolver 19 ist zwischen einer in Fig. 2 gezeigten Übernahmestellung näher beim Magazinträger 4 und wenigstens einer nicht gezeigten, angehobenen Einsetzstellung mittels der Lineareinheit verstellbar und wird beispielsweise durch einen Antrieb 20 angetrieben. Die Drehbarkeit des Magazinträges 4 um die vertikale Achse X erleichtert das Bestücken und Entleeren des Magazinträgers 4 mit Magazinen 8, 8', beispielsweise manuell durch den in Fig. 1 angedeuteten Bediener 2 und portioniert die Magazine 8, 8' zur Übernahme oder Abgabe durch den Revolver 19.

Da der Revolver 19 jeweils eine Gruppe Heizdorne D oder Abschirmplatten P zum Einsetzen bereithält, und auch jeweils eine Gruppe Heizdorne und Abschirmplatten D, P nach einem Wechsel aufnimmt, fungiert er als Zwischenspeicher oder Zwischenpuffer.

Obwohl der in den Fig. 1 und 2 gezeigte Wechselautomat A jeweils zum Wechseln einer Gruppe Heizdorne D und/oder Abschirmplatten P konzipiert ist, könnte er bei einer alternativen Ausführungsform auch so gestaltet sein, dass er die Heizdorne D und Abschirmplatten P einzeln automatisch wechselt.

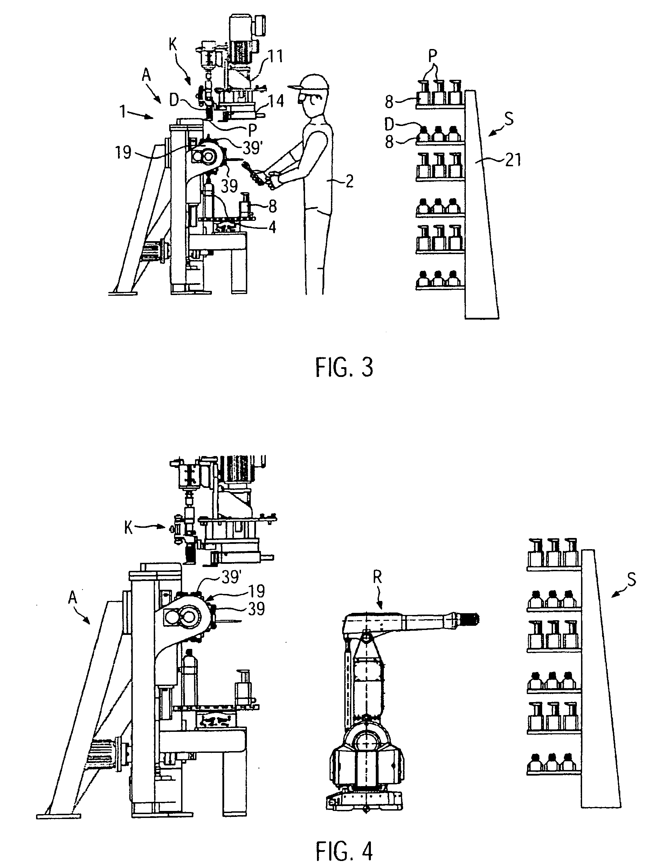

Fig. 3 zeigt, analog zu Fig. 1, in einer Seitenansicht den Wechselautomaten A, einen Bediener 2 und ein dem Wechselautomaten A zugeordnetes Puffersystem S zum Bereithalten und Lagern der Magazine 8, 8'. Das Puffersystem S umfasst beispielsweise zumindest ein Regal 21, oder, nicht gezeigt, einen Tisch, einen Garniturenwechselwagen, einen Paternoster, ein Rondell, oder eine andere Lagerungsmöglichkeit, die dem Wechselautomaten A funktionell so zugeordnet ist, dass beispielsweise der Bediener 2 die Bestückung und Entleerung des Wechselautomaten A manuell bequem durchzuführen vermag.

Fig. 4 zeigt hingegen in einer Seitenansicht ein vollautomatisches Wechselsystem, bestehend aus dem Wechselautomaten A, dem Puffersystem S und wenigstens einem dazwischen angeordneten Roboter R, der die Bestückung und Entleerung des Wechselautomaten A aus dem Puffersystem S vollautomatisch durchführt. Anstelle eines Roboters R könnten auch andere Handlingsysteme, wie z.B. Linearachsen, verwendet werden.

Fig. 5 zeigt die Magazine 8, 8'. Jedes Magazin 8 dient zur Lagerung mehrerer, beispielsweise acht, Abschirmplatten P, deren jede einen Plattenkörper 25 mit einem Durchgang 26 für ein Ende des Heizdorns D und den daran geladenen Preform enthält, sowie an dem Plattenkörper 25 angeordnete Steckfüße 27 zum Festlegen und Positionieren der Abschirmplatte P an der Förderkette K aufweist. Die Steckfüße 27 sind beispielsweise in Öffnungen 23 des Magazins 8 eingesteckt. Die geladenen Abschirmplatten P können zusätzlich durch einen Steg 24 gesichert sein. Das Magazin 8' für die Heizdorne D besitzt eine Reihe beabstandeter Öffnungen 22, in die die Heizdorne D passen. Die Magazine 8, 8' sind beispielsweise Druckguss-Formteile. Die Anzahl der Heizdorne D bzw. Abschirmplatten P kann jede beliebige Anzahl umfassen, wobei zweckmäßig die Anzahlen untereinander gleich sind.

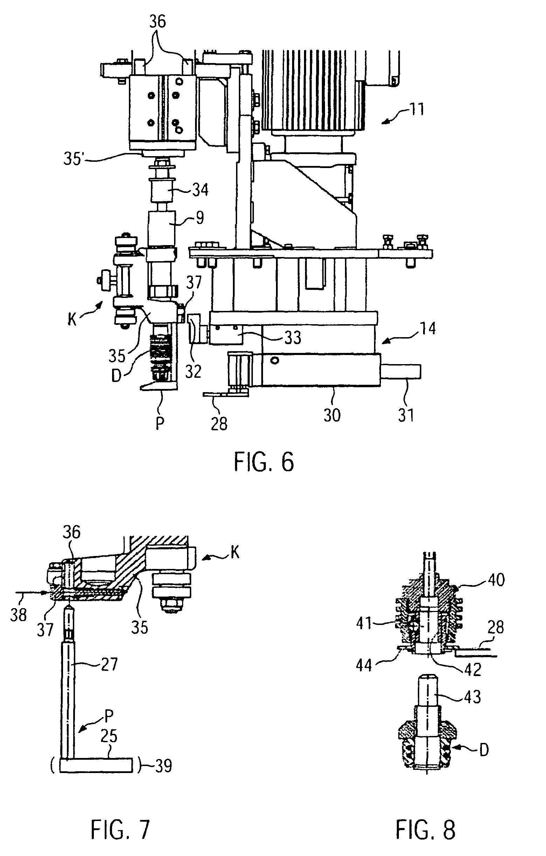

Fig. 6 zeigt in einer Seitenansicht die Förderkette K und die Spindelbrücke 11 für einen automatischen Wechsel sowohl der Abschirmplatten P als auch der Heizdorne D. Die Entriegelungskomponenten 14 sind beispielsweise Gabeln oder Finger 28 zum Lösen von Heizdorn-Verriegelungen 44 (Fig. 8) und Druckstifte oder Druckplatten 32 zum Lösen von Abschirmplatten-Verriegelungen 37 (Fig. 7). Die Gabeln 28 bzw. die Finger können mittels wenigstens eines Aktuators 29, z.B. eines Pneumatikzylinders, in Hochrichtung verstellbar und zusätzlich in einem Gehäuse 30 über wenigstens einen weiteren Aktuator 31, vorzugsweise einen Pneumatikzylinder, in Horizontalrichtung verstellbar sein. Die Druckfinger 32 sind mittels wenigstens eines Aktuators 33, beispielsweise eines Pneumatikzylinders, in Horizontalrichtung verstellbar, und, beispielsweise, auf der Höhe der Abschirmplatten-Verriegelungen 37 positioniert, die sich jeweils baulich separiert von der Heizdorn-Aufnahme 42 (siehe auch die Fig. 7 und 8) in einem Körper 35 eines Kettengliedes befinden.

An der Spindelbrücke 11 in Fig. 6 ist eine Abdrückplatte 35 in Hochrichtung beweglich gelagert, die durch Aktuatoren 36, z.B. Pneumatikzylinder, aus der in Fig. 6 gezeigten Position in die in Fig. 9 gezeigte Position absenkbar ist, um einen Schaft 34 in der Spindel 9 und damit die Heizdorn-Aufnahme 42 (Fig. 8) vorübergehend nach unten zu verlagern, bis das untere Ende des Heizdorns D durch die Abschirmplatte P nach unten vorsteht und leichter zu ergreifen ist.

Fig. 6 verdeutlicht eine Ausgangssituation für einen automatischen Wechsel sowohl der Abschirmplatten P als auch der Heizdorne D. In diesem Fall brauchen die Aktuatoren 36 gegebenenfalls nicht betätigt zu werden, da zunächst (Fig. 7) die Abschirmplatten P mittels der Druckstifte 32 gelöst und von dem Greifer 39 des Revolvers 19 entnommen werden, und danach erst die Heizdorne D, die dann freiliegen, nach Lösen der Heizdorn-Verriegelungen 44 mittels der Gabeln oder Finger 28 vom Greifer 39' des um eine Teilung weitergedrehten Revolvers 19 entnommen werden können. Die Heizdorn-Aufnahme 42 ist in einem z.B. mit dem Schaft 34 verbundenen Körper 40 des Kettengliedes geformt und trägt am unteren Ende die Heizdorn-Verriegelung 44, z.B. einen Kreisring, der nur zum Lösen des Kugelgesperres 41 gegen Federkraft von der Gabel oder einem Finger 28 vorübergehend hochzudrücken ist. Obwohl beim sequentiellen Wechseln der Heizdorne D und der Abschirmplatten P die Betätigung der Abdrückplatte 35 nicht unbedingt notwendig ist, kann die Abdrückplatte 35 dennoch benutzt werden, um die Heizdorne D besser für den Greifer 39' des Revolvers 19 zu positionieren, und mit einem kürzeren Vertikalhub des Revolvers 19 auszukommen.

Nachfolgend wird der die nun entnommenen Abschirmplatten P und Heizdorne D zwischenspeichernde Revolver 19 um eine Teilung weitergedreht, um die einzusetzenden Heizdorne D in die Einsetzposition zu bringen. Natürlich wird der Revolver 19 zwischen der Entnahme der Abschirmplatten P und der Entnahme der Heizdorne D jeweils vorübergehend abgesenkt und entsprechend verdreht und danach mittels der Lineareinheit wieder hochgestellt.

Die einzusetzenden Heizdorne D sind nun mit Schäften 43 auf die Heizdorn-Aufnahmen 42 (siehe Fig. 8) ausgerichtet und werden durch Hochstellen des Revolvers 19 in die Heizdorn-Aufnahmen 42 eingeführt und darin beispielsweise selbsttätig mittels Kugelgesperren 41 verriegelt, ehe der Greifer 39' geöffnet wird und der Revolver 19 wieder nach unten fährt. Sobald die Heizdorne D ordnungsgemäß eingesetzt sind, fährt der Revolver 19 wieder nach unten und wird nachfolgend oder währenddessen um eine Teilung weitergedreht, so dass nun die einzusetzenden Abschirmplatten P mit ihren nach oben gerichteten Steckfüßen 27 (Fig. 7) zum Einsetzen bereit sind. Der Revolver 19 fährt erneut hoch und schiebt die Steckfüße 27 der vom Greifer 39 gehaltenen Abschirmplatten P in Bohrungen 36 des Kettengliedkörpers 35, worauf die Steckfüße 27 selbsttätig durch die Abschirmplatten-Verriegelung 37 verriegelt werden, beispielsweise durch einen gegen Federkraft verschiebbaren Stift, der mit einer Öffnung in eine Fangnut im Steckfuß 27 eingreift. In Fig. 7 deutet im Übrigen der Pfeil 38 die Druckrichtung der Druckstifte 32 zum Lösen der Abschirmplatten-Verriegelung 37 an.

Danach wird der Greifer 39 geöffnet und fährt der Revolver 19 wieder nach unten. Damit ist ein Wechselzyklus sowohl für die Heizdorne D als auch die Abschirmplatten P vollzogen. Obwohl dies nicht unbedingt erforderlich ist, kann zum Wechseln der Heizdorne D auch die Druckplatte 35 vorübergehend nach unten gefahren worden sein, um das Ergreifen der zu wechselnden Heizdorne D zu erleichtern und/oder die Heizdorn-Verriegelung 44 näher zu den Gabeln oder Fingern 28 zu bringen und/oder mit einem kürzeren und weniger Zeit beanspruchenden Stellhub des Revolvers 19 auszukommen.

In der Folge oder bereits während des Wechselzyklus kann der Revolver 19 durch entsprechende Absenkbewegungen und Verdrehungen um die Achse Y entnommenen Heizdorne D und Abschirmplatten P in die Magazine 8, 8' auf dem Magazinträger 4 laden, ehe die Magazine 8, 8' in das Puffersystem S transferiert und durch neue volle Magazine 8, 8' ersetzt werden. Dies kann entweder der Bediener 2 oder der Roboter R dann vollautomatisch ausführen. Danach ist der Wechselautomat für einen neuen Wechselzyklus bereit. Die Förderkette K wird eine entsprechende Strecke weitertransportiert, damit die nächsten zu wechselnden Heizdorne und Abschirmplatten D, P in den Servicebereich 1 und zum Wechselautomaten A gebracht werden. Alternativ könnten die Heizdorne D und Abschirmplatten P auch einzeln transferiert werden.

Derselbe Wechselautomat kann gemäß Fig. 9 automatisch auch nur die Heizdorne D wechseln, falls die Abschirmplatten P an der Förderkette K verbleiben, da sie auch zu den neuen Heizdornen D bzw. Preforms passen. Am Beginn eines solchen Wechselzyklus ist zunächst der Revolver 19 mit dem leeren Greifer 39' auf die Heizdorne D ausgerichtet und hochgefahren, bis sich der Greifer 39' in einer angehobenen Position bereit zur Aufnahme der Heizdorne D befindet. Der um 180° versetzte Greifer 39' ist beladen. Gleichzeitig, danach oder zuvor ist die Abdrückplatte 35 nach unten verstellt worden, um die Schäfte 34 der Gruppe der zu entnehmenden Heizdorne D in den Spindeln 9 nach unten zu drücken, bis die unteren Enden der Heizdorne D (Fig. 9) nach unten über die Abschirmplatten P vorstehen und in den Bereich des Greifers 39' eingetreten sind. Der Greifer 39' greift die Heizdorne D, während oder ehe die Gabeln oder Finger 28 die Heizdorn-Verriegelungen 44 gelöst haben, wonach der Revolver 19 nach unten fährt und die Heizdorne D herauszieht. Dann wird der Revolver 19 um eine 180°-Teilung gedreht, um die einzusetzenden Heizdorne D auf die Heizdorn-Aufnahmen 42 auszurichten, und werden gegebenenfalls die entnommenen Heizdorne D in ein leeres Magazin 8' gesteckt. Der Revolver 19 fährt wieder hoch und schiebt die Schäfte 43 der Heizdorne D in die Heizdorn-Aufnahmen 42, in denen sie durch die Kugelgesperre 41 verriegelt werden. Die Gabeln oder Finger 28 sind bereits zuvor von den Heizdorn-Verriegelungen 44 entfernt worden. Damit ist der Wechselzyklus vollzogen. Die Abdrückplatte 35 wird wieder angehoben, ehe die Förderkette K um ein entsprechendes Maß weitertransportiert wird, um die nächste Gruppe Heizdorne D zu wechseln. Der Revolver 19 übergibt gegebenenfalls erst dann die entnommenen Heizdorne D an das Magazin 8', das in das Puffersystem S transferiert und durch ein Magazin 8' mit einzusetzenden Heizdornen D ersetzt wird, und zwar entweder durch den Bediener 2 oder vollautomatisch durch den Roboter R. Um den Wechselautomaten A zwischen den zwei verschiedenen Wechselmodi umzustellen, sind keine Umrüstarbeiten erforderlich, sondern braucht nur steuerungsseitig von einem Modus in den anderen umgestellt zu werden. Die Wechselmodi können unterschiedlich in ihrem Ablauf gestaltet werden. Folgend ist ein Beispiel genannt.

### Kurzbeschreibung der zwei unterschiedlichen Wechselmodi, jeweils für einen Wechselzyklus:

Modus zum automatischen Wechseln der Heizdorne D und der Abschirmplatten P:
Der Revolver 19 hat jeweils einen beladenen und einen leeren Greifer 39, 39'.

Die Lineareinheit fährt den mit dem leeren Greifer 39 für Abschirmplatten P nach oben weisenden Revolver 19 nach oben.

Der Greifer 39 spannt die Abschirmplatten P.

Die Druckstifte 32 fahren aus und lösen die Abschirmplatten-Verriegelungen 37.

Die Lineareinheit zieht den Revolver 19 nach unten und entnimmt die Abschirmplatten P.

Der Revolver 19 wird um 90° gedreht, um den leeren Greifer 39' für Heizdorne D nach oben auszurichten.

Option: Gegebenenfalls fährt die Abdrückplatte 35 an der Spindelbrücke 11 nach unten und drückt die Heizdorne D heraus.

Die Lineareinheit fährt den Revolver 19 nach oben.

Der leere Greifer 39' greift die Heizdorne D.

Die Gabeln oder Finger 28 werden zum Angriff an den Heizdorn-Verriegelungen 44 gebracht und lösen diese.

Die Lineareinheit fährt den Revolver 19 mit den ergriffenen Heizdornen D nach unten.

Der Revolver 19 wird jeweils um 90° gedreht und steckt die Heizdorne D und Abschirmplatten P in ein leeres Magazin 8, 8', und fährt jeweils etwas hoch, während der Tisch 5 um 180° gedreht wird.

Die Gabeln oder Finger 28 werden zurückgestellt.

Der Bediener 2 oder der Roboter R bestückt entweder ein neues Magazin 8, 8' auf dem Tisch 5 mit einzusetzenden Heizdornen D und Abschirmplatten P oder bestückt den Magazinträger 4 mit neuen Heizdornen D und Abschirmplatten P enthaltenden Magazinen 8, 8', und transferiert die entnommenen Heizdorne D und Abschirmplatten P oder die Magazine 8, 8' in das Puffersystem S.

Der Tisch 5 wird zuvor oder danach jeweils um die Achse X um 180° gedreht.

Die Lineareinheit fährt den Revolver 19 nach unten.

Die Greifer 39, 39' greifen weitere einzusetzende Heizdorne D und Abschirmplatten P.

Die Lineareinheit fährt den Revolver 19 nach oben in eine Mittelstellung.

Der Revolver 19 wird gegebenenfalls um 180° um die Achse Y gedreht.

Die Lineareinheit fährt den Revolver 19 vollständig nach oben und steckt die Heizdorne D in die Heizdorn-Aufnahmen.

Der Greifer 39' löst sich von den Heizdornen D.

Der Revolver 19 wird abgesenkt und um 90° um die Achse Y gedreht.

Die Lineareinheit fährt den Revolver 19 nach unten.

Der Greifer 39 greift weitere einzusetzende Abschirmplatten P.

Die Lineareinheit fährt den Revolver 19 nach oben in eine Mittelstellung.

Der Revolver 19 wird gegebenenfalls um 180° um die Achse Y verdreht.

Option: An der Spindelbrücke 11 fährt die Abdrückplatte 35 nach oben.

Die Lineareinheit fährt den Revolver 19 zur Gänze nach oben und steckt die Abschirmplatten P in das Kettenglied.

Der Greifer 39 löst sich von den eingesetzten Abschirmplatten P.

Die Lineareinheit fährt den Revolver 19 in Mittelstellung zurück.

Die Druckstifte 32 fahren in die Ausgangsstellung zurück.

Die Förderkette K wird um eine bestimmte Anzahl an Teilungen weitergetaktet.

Ein neuer Wechselzyklus beginnt, bis schließlich alle Heizdorne D und Abschirmplatten P gewechselt sind.

Wechselmodus nur für die Heizdorne D:
Der Revolver 19 hat einen beladenen Greifer 39' und einen leeren Greifer 39'.

Die Lineareinheit fährt den Revolver 19 mit dem nach oben ausgerichteten, leeren Greifer 39' für die zu entnehmenden Heizdorne D nach oben, bis in eine Mittelstellung.

An der Spindelbrücke 11 bewegt sich die Abdrückplatte 35 nach unten und drückt die Heizdorne D vor, bis diese aus den Abschirmplatten P vorstehen.

Die Lineareinheit fährt den Revolver 19 nach oben, bis die Heizdorne D in den leeren Greifer 39' eingetreten sind.

Der Greifer 39' spannt die zu entnehmenden Heizdorne D.

Die Gabeln oder Finger 28 betätigen die Heizdorn-Verriegelungen 44 und löst die Heizdorne D.

Die Lineareinheit fährt den Revolver 19 mit den gegriffenen Heizdornen D nach unten.

Die Gabeln oder Finger 28 werden zurückgestellt.

Die Lineareinheit fährt den Revolver 19 nach unten, dieser dreht sich um 180°, und übergibt die entnommenen Heizdorne D an das leere Magazin 8' auf dem Tisch 5.

Der Greifer 39' wird gelöst, ehe der Revolver 19 nach oben fährt.

Der Tisch 5 wird um 180° gedreht, um das Magazin 8' mit den entnommenen Heizdornen D zum Puffersystem S auszurichten, und gleichzeitig ein neues Magazin 8' unterhalb des leeren Greifers 39' des Revolvers 19 zu positionieren.

Der Bediener 2 oder der Roboter R transferiert das Magazin 8' mit den entnommenen Heizdornen D in das Puffersystem S und transferiert ein neues Magazin 8' mit einzusetzenden Heizdornen D auf den Tisch 5, auf dem dieses auf dem Magazinträger positioniert und festgespannt wird.

Die Lineareinheit fährt den Revolver 19 nach unten, bis der Greifer 39' die einzusetzenden Heizdorne D ergriffen hat.

Die Lineareinheit fährt den Revolver 19 nach oben in eine Mittelstellung.

Der Revolver 19 wird gegebenenfalls um 180° gedreht.

Die Lineareinheit fährt den Revolver 19 vollständig nach oben, der die einzusetzenden Heizdorne D in die nach unten gedrückten Heizdorn-Aufnahmen 42 steckt.

Der Greifer 39' löst sich von den eingesetzten Heizdornen D.

Die Lineareinheit fährt den Revolver 19 nach unten.

Die Abdrückplatte 35 an der Spindelbrücke 11 wird nach oben verstellt.

Der Revolver 19 wird um 180° gedreht und transferiert die entnommenen Heizdorne in das leere Magazin 8'.

Der Greifer 39' wird gelöst und der Revolver 19 wird nach oben in eine Mittelstellung verfahren.

Der Tisch 5 wird um 180° um die Achse X gedreht, um das Magazin 8' mit den entnommenen Heizdornen D zum Puffersystem S auszurichten und ein neues Magazin 8' mit einzusetzenden Heizdornen D auf den leeren Greifer 39' des Revolvers 19 auszurichten.

Der Bediener 2 oder der Roboter R transferiert das Magazin 8' mit den entnommenen Heizdornen D in das Puffersystem S und transferiert ein neues Magazin 8' mit einzusetzenden Heizdornen D auf den Tisch 5.

Die Förderkette K wird um eine bestimmte Anzahl an Teilungen weitergetaktet.

Der Wechselzyklus für eine Gruppe Heizdorne ist vollzogen.

## Patentansprüche

1. Blasmaschine (M) für Behälter, insbesondere Flaschen, mit einem einer Blasstation (B) zugeordneten Preform-Heizmodul (H), der eine Förderkette (K) mit wechselbaren Heizdornen (D), und optional auch wechselbaren Abschirmplatten (P), enthält, wobei im Heizmodul (H) an der Förderkette (K) an zumindest einer Stelle der Förderkette (K) zumindest ein Wechselautomat (A) zum automatischen Wechseln zumindest der Heizdorne (D) vorgesehen ist, der zumindest ein Magazin (8, 8') und Greifer (39, 39') zum Entnehmen und Einsetzen zumindest der Heizdorne (D) aufweist, **dadurch gekennzeichnet, dass** der Wechselautomat (A) einen Magazinträger (4) und einen zwischen dem Magazinträger (4) und der Förderkette (K) verstellbaren und drehbaren und mit den Greifern (39, 39') ausgestatteten Entnahme- und Einsetzrevolver (19) aufweist.

2. Blasmaschine nach Anspruch 1, **dadurch gekennzeichnet, dass** in einem Rahmengestell (3) des Wechselautomaten (A) der Magazinträger (4) und benachbart zu diesem eine linearverstellbare, den Entnahme- und Einsetzrevolver (19) aufweisende Lineareinheit (15, 16, 17, 18) vorgesehen sind.

3. Blasmaschine nach Anspruch 2, **dadurch gekennzeichnet, dass** zum Angriff an an der Förderkette (K) vorgesehenen Verriegelungen (37, 44) zumindest der Heizdorne (D) beweglich antreibbare Entriegelungskomponenten (14) entweder am Rahmengestell (3) des Wechselautomaten (A) oder an einer bei der Förderkette (K) stationär montierten Spindelbrücke (11) angeordnet sind.

4. Blasmaschine nach Anspruch 1, **dadurch gekennzeichnet, dass** an der Stelle, an der der Wechselautomat (A) angeordnet ist, im Heizmodul (H) an der Förderkette (K) ein Servicebereich (1) vorgesehen ist.

5. Blasmaschine nach Anspruch 2, **dadurch gekennzeichnet, dass** der Magazinträger (4) ein im Rahmengestell (3) um eine annähernd vertikale Achse (X) drehbarer, vorzugsweise um 180° hin- und herdrehbarer, Tisch (5) ist, auf dem zumindest eine Magazinspannvorrichtung (6, 6', 7) angeordnet ist.

6. Blasmaschine nach Anspruch 2, **dadurch gekennzeichnet, dass** der Entnahme- und Einsetzrevolver (19) mit den Greifern (39, 39') im Rahmengestell (3) an der Lineareinheit (15 bis 18) um eine horizontale Drehachse (Y) in Schritten drehantreibbar ist, und, vorzugsweise, entweder nur Greifer (39') für Heizdorne (D) oder in Drehrichtung abwechselnd Greifer (39, 39') für Heizdorne (D) und für Abschirmplatten (P) aufweist, vorzugsweise mit 90°-Teilungen abwechselnde Greifer (39, 39') für Heizdorne (D) und für Abschirmplatten (P).

7. Blasmaschine nach Anspruch 1, **dadurch gekennzeichnet, dass** dem Wechselautomaten (A) ein Puffersystem (S) für zumindest Heizdorne (D), vorzugsweise auch Abschirmplatten (P), zugeordnet ist, vorzugsweise ein Puffersystem (S) für Gruppenmagazine (8, 8').

8. Blasmaschine nach Anspruch 7, **dadurch gekennzeichnet, dass** mit dem Wechselautomaten (A) in einem Wechselzyklus über den Entnahme- und Einsetzrevolver (19) zunächst entriegelte Abschirmplatten (P) und nachfolgend entriegelte Heizdorne (D) entnehmbar sind, ehe einzusetzende Heizdorne (D) und danach einzusetzende Abschirmplatten (P) montierbar sind, und dass der Entnahme- und Einsetzrevolver (19) einen vom Puffersystem (S) unabhängigen Zwischenspeicher zumindest für während eines Wechselzyklus entnommene Heizdorne und Abschirmplatten bildet.

9. Blasmaschine nach Anspruch 7, **dadurch gekennzeichnet, dass** wenigstens ein Roboter (R) zum automatischen Bestücken und Entleeren des Wechselautomaten (A) aus dem Puffersystem (S) vorgesehen ist.

10. Blasmaschine nach Anspruch 3, **dadurch gekennzeichnet, dass** die Heizdorne (D) in Aufnahmen (40) von Spindeln (9) angeordnet sind, die an der Förderkette (K) relativ zu den Abschirmplatten (P) beweglich sind, und dass zum automatischen Wechseln nur der Heizdorne (D) ein Spindelbewegungsmechanismus (35, 36) entweder an der stationären Spindelbrücke (11) oder an dem Wechselautomaten (A) angeordnet ist.

11. Blasmaschine nach Anspruch 3, **dadurch gekennzeichnet, dass** die entweder an der Spindelbrücke (11) oder am Rahmengestell (3) des Wechselautomaten (A) angeordneten Entriegelungskomponenten (14) durch Aktuatoren (29, 31, 33), vorzugsweise Pneumatikzylinder, ausfahrbare und anhebbare Gabeln oder Finger (28) zum Lösen von Heizdorn-Verriegelungen (44) und/oder zumindest ausfahrbare Druckstifte (32) zum Lösen von Abschirmplatten-Verriegelungen (37) aufweisen.

12. Blasmaschine nach Anspruch 7, **dadurch gekennzeichnet, dass** das Puffersystem (S) wenigstens ein Regal (21), einen Tisch, einen Wechselwagen, einen Paternoster, ein Rondell oder dgl. aufweist, vorzugsweise mit Einzellagerstellen oder Magazinlagerstellen.

## Claims

1. Blowing machine (M) for containers, in particular bottles, with a preform heating module (H) associated to a blowing station (B) and containing a conveyor chain (K) with exchangeable heating mandrels (D) and optionally also exchangeable shielding plates (P),
wherein in the heating module (H) at least one automatic changing unit (A) is provided for automatically changing at least the heating mandrels (D) at at least one location of the conveyor chain (K), the automatic changing unit (A) comprising at least a magazine (8, 8') and grippers (39, 39') for removing and inserting at least the heating mandrels (D), **characterised in that** the automatic changing unit (A) comprises a magazine carrier (4) and comprises a removal and insertion turret (19) equipped with the grippers (39, 39') and being adjustable and rotatable between the magazine carrier (4) and the conveyor chain.

2. Blowing machine according to Claim 1, **characterised in that** the magazine carrier (4) and close to the magazine carrier (4), a linearly adjustable linear unit (15, 16, 17, 18) having the removal and insertion turret (19) are positioned in a frame base (3) of the automatic changing unit (A).

3. Blowing machine according to Claim 2, **characterized in that** for an engagement at at least heating mandrel locking devices (37, 44) arranged on the conveyor chain (K) movable driven unlocking components (14) are provided either at the frame base (3) of the automatic changing unit (A) or at a spindle bridge (11) stationarily mounted close to the conveyor chain (K).

4. Blowing machine according to Claim 1, **characterized in that** at the location where the automatic changing unit (A) is arranged, a service area (1) is provided in the preform heating module (H) and there close to the conveyor chain (K).

5. Blowing machine according to Claim 2, **characterised in that** the magazine carrier (4) is a table (5) which is rotatable at the frame base (3) about an approximately vertical axis (X), preferably by 180° to and fro, on which table (5), at least one magazine clamping device (6, 6', 7) is arranged.

6. Blowing machine according to Claim 2, **characterised in that** the removal and insertion turret (19) inclusive of the grippers (39, 39') is rotationally drivable in steps at the linear unit (15 to 18) in the frame base (3) about a horizontal axis (Y) of rotation, and, preferably, has either only grippers (39') for heating mandrels (D) or, in the direction of rotation, alternately grippers (39, 39') for heating mandrels (D) and for shielding plates (P), preferably with grippers (39, 39') for heating mandrels (D) and for shielding plates (P) alternating in 90° pitches.

7. Blowing machine according to Claim 1, **characterised in that** the automatic changing unit (A) is associated a buffer system (S) for at least heating mandrels (D), preferably also for shielding plates (P), preferably a buffer system (S) for group magazines (8, 8').

8. Blowing machine according to Claim 7, **characterised in that** firstly unlocked shielding plates (P) followed by unlocked heating mandrels (D) can be removed with the automatic changing unit (A) during a changeover cycle by the removal and insertion turret (19) before heating mandrels (D) to be inserted and then shielding plates (P) to be inserted can be mounted, and that the removal and insertion turret (19) forms a temporary intermediate store independently of the buffer system (S) at least for heating mandrels and shielding plates removed during a changeover cycle.

9. Blowing machine according to Claim 7, **characterised in that** at least one robot (R) for automatically charging and discharging the automatic changing unit (A) from the buffer system (S) is provided.

10. Blowing machine according to Claim 3, **characterised in that** the heating mandrels (D) are accommodated in sockets (40) of spindles (9), which are movable on the conveyor chain (K) relative to the shielding plates (P), and that a spindle movement mechanism (35, 36) is arranged either stationarily on the spindle bridge (11) or on the automatic changing unit (A) for automatically changing just the heating mandrels (D).

11. Blowing machine according to Claim 3, **characterised in that** the unlocking components (14) arranged either on the spindle bridge (11) or on the automatic changing unit (A) have forks or fingers (28), which can be extended and raised by actuators (29, 31, 33), preferably pneumatic cylinders, for releasing heating mandrel locking devices (44), and / or at least extendable pressing pins (32) for releasing shielding plate locking devices (37).

12. Blowing machine according to Claim 7, **characterised in that** the buffer system (S) has at least a shelf (21), a table, a changing carriage, a paternoster store, a carousel or similar feature, preferably either with single storage points or magazine storage points.

## Revendications

1. Machine de soufflage (M) pour des récipients, en particulier des bouteilles, avec au moins un module de chauffage de préformes (H) qui est associé à une station de soufflage (B) et qui contient une chaîne de transport (K) avec des mandrins de chauffage échangeables (D) et aussi, à titre optionnel, des plaques de protection échangeables (P), étant précisé qu'il est prévu dans le module de chauffage (H), à au moins un endroit de la chaîne de transport (K), au moins un automate de changement (A) pour changer automatiquement au moins les mandrins de chauffage (D), qui comporte au moins un magasin (8, 8') et des éléments de préhension (39, 39') pour prélever et mettre en place au moins les mandrins de chauffage (D), **caractérisée en ce que** l'automate de changement (A) comporte un support de magasin (4) et une tourelle revolver de prélèvement et de mise en place (19) qui est mobile et rotative entre le support de magasin (4) et la chaîne de transport (K) et qui est équipée des éléments de préhension (39, 39').

2. Machine de soufflage selon la revendication 1, **caractérisée en ce que** le support de magasin (4) est prévu dans un châssis (3) de l'automate de changement (A), et près dudit support de magasin (4) est prévue une unité linéaire (15, 16, 17, 18) qui est mobile linéairement et qui comporte la tourelle revolver de prélèvement et de mise en place (19).

3. Machine de soufflage selon la revendication 2, **caractérisée en ce que** pour agir sur des dispositifs de verrouillage (37, 44) prévus pour au moins les mandrins de chauffage (D) sur la chaîne de transport (K), des composants de déverrouillage (14) aptes à être entraînés de manière mobile sont prévus soit sur le châssis (3) de l'automate de changement (A), soit sur un portique de broches (11) monté fixe sur la chaîne de transport (K).

4. Machine de soufflage selon la revendication 1, **caractérisée en ce qu'**à l'endroit où est disposé l'automate de changement (A), une zone d'entretien (1) est prévue dans le module de chauffage (H) sur la chaîne de transport (K).

5. Machine de soufflage selon la revendication 2, **caractérisée en ce que** le support de magasin (4) est constitué par une table (5) apte à tourner dans le châssis (3) sur un axe (X) approximativement vertical, de préférence apte à décrire une rotation alternative de 180°, sur laquelle est disposé au moins un dispositif de serrage de magasin (6, 6', 7).

6. Machine de soufflage selon la revendication 2, **caractérisée en ce que** la tourelle revolver de prélèvement et de mise en place (19) est apte à être entraînée en rotation par pas avec les éléments de préhension (39, 39') dans le châssis (3), sur l'unité linéaire (15 à 18), sur un axe de rotation horizontal (Y), et présente de préférence soit uniquement des éléments de préhension (39') pour les mandrins de chauffage (D), soit en alternance dans le sens de rotation des éléments de préhension (39, 39') pour les mandrins de chauffage (D) et pour les plaques de protection (P), de préférence des éléments de préhension (39, 39') qui alternent, avec des écartements de 90°, pour les mandrins de chauffage (D) et les plaques de protection (P).

7. Machine de soufflage selon la revendication 1, **caractérisée en ce qu'**un système tampon (S) pour au moins les mandrins de chauffage (D), de préférence aussi pour les plaques de protection (P), est associé à l'automate de changement (A), de préférence un système tampon (S) pour des magasins de groupes (8, 8').

8. Machine de soufflage selon la revendication 7, **caractérisée en ce qu'**avec l'automate de changement (A), des plaques de protection (P) tout d'abord déverrouillées et des mandrins de chauffage (D) déverrouillés ensuite sont aptes à être prélevés lors d'un cycle de changement par l'intermédiaire de la tourelle revolver de prélèvement et de mise en place (19), avant que des mandrins de chauffage (D) à mettre en place et des plaques de protection (P) à mettre en place ensuite puissent être montés, et **en ce que** ladite tourelle revolver (19) forme une réserve intermédiaire, indépendante du système tampon (S), au moins pour les mandrins de chauffage et les plaques de protection prélevés pendant un cycle de changement.

9. Machine de soufflage selon la revendication 7, **caractérisée en ce qu'**il est prévu au moins un robot (R) pour garnir et vider automatiquement l'automate de changement (A) à partir du système tampon (S).

10. Machine de soufflage selon la revendication 3, **caractérisée en ce que** les mandrins de chauffage (D) sont disposés dans des logements (40) de broches (9) qui sont mobiles sur la chaîne de transport (K) par rapport aux plaques de protection (P), et **en ce que** pour changer automatiquement uniquement les mandrins de chauffage (D), un mécanisme de déplacement de broche (35, 36) est disposé soit sur le portique de broches fixe (11), soit sur l'automate de changement (A).

11. Machine de soufflage selon la revendication 3, **caractérisée en ce que** les composants de déverrouillage (14) disposés soit sur le portique de broches (11), soit sur le châssis (3) de l'automate de changement (A) comportent des fourches ou doigts (28) aptes à être déployés et soulevés par des actionneurs, (29, 31, 33), de préférence des vérins pneumatiques, pour débloquer les dispositifs de verrouillage de mandrins (44), et/ou au moins des tiges de pression (32) aptes à être déployées, pour débloquer les dispositifs de verrouillage de plaques de protection (37).

12. Machine de soufflage selon la revendication 7, **caractérisée en ce que** le système tampon (S) comporte au moins un rayonnage (21), une table, un chariot de changement, un pater noster, une rotonde, ou un élément similaire, de préférence avec des endroits de stockage indépendants ou des endroits de stockage de magasins.
